# EUROPÄISCHE PATENTSCHRIFT

(11) **EP 3 083 870 B1**
(45) Veröffentlichungstag und Bekanntmachung des Hinweises auf die Patenterteilung: **01.11.2017**
(21) Anmeldenummer: 14837066.1
(22) Anmeldetag: 17.12.2014
(51) Int. Cl.: C09K 3/14

(54) **VERFAHREN ZUR HERSTELLUNG VON MEHRSCHICHT-SCHLEIFPARTIKELN**
METHOD FOR PRODUCING MULTILAYER ABRASIVE PARTICLES
PROCÉDÉ DE FABRICATION DE PARTICULES ABRASIVES MULTICOUCHES

(30) Priorität: 19.12.2013 DE 102013114492
(43) Veröffentlichungstag der Anmeldung: 26.10.2016
(73) Patentinhaber: Klingspor AG, 35708 Haiger (DE); Fraunhofer-Gesellschaft zur Förderung der angewandten Forschung e.V., 80007 München (DE)
(72) Erfinder: BOCK, Irene, 35683 Dillenburg (DE); STUDNITZKY, Thomas, 01309 Dresden (DE); KAMPS, Thomas, 59439 Holzwickede (DE)
(74) Vertreter: advotec.
(86) Internationale Anmeldenummer: PCT/DE2014/100454
(87) Internationale Veröffentlichungsnummer: WO 2015/090284

(56) Entgegenhaltungen:
- US-A1- 2006 042 172
- US-A1- 2012 167 481
- US-A1- 2013 180 180
- US-A1- 2013 236 725

## Beschreibung

Die vorliegende Erfindung betrifft ein Verfahren zur Herstellung von Mehrschicht-Schleifpartikeln, gemäss dem Oberbegriff des Anspruchs 1, wie z.B. aus der US 2013/0236725 A1 bekannt. Schleifpartikel werden allgemein zur Herstellung von Schleifmitteln verwendet, mit denen wiederum ein Schleifgut bearbeitet bzw. geschliffen wird. Bei den Schleifpartikeln kann es sich beispielsweise um keramische Schleifpartikel handeln. Diese weisen aufgrund ihrer Materialeigenschaften besonders gute Schleifeigenschaften auf. Ziel der Schleifpartikelherstellung ist es, Partikel zu erhalten, die in einem entsprechenden Schleifmittel während des Schleifvorgangs eine möglichst konstante und möglichst hohe Schleifleistung bzw. Schleifwirkung erzeugen.

Zur Herstellung von Schleifpartikeln, die die oben genannten Eigenschaften teilweise verwirklichen, sind verschiedene Verfahren bekannt. Beispielsweise ist es bekannt, ein großflächiges bzw. großvolumiges Formstück aus dem Material der Schleifpartikel herzustellen und dieses anschließend zu zerkleinern, um die Schleifpartikel zu erhalten. Derartige Verfahren sind jedoch energieaufwändig und führen zu einer breiten Verteilung an resultierenden Schleifpartikeln, da der Zerkleinerungsprozess nur geringfügig bis überhaupt nicht selektiv verläuft. Folglich haben die resultierenden Schleifpartikel unterschiedliche Größen, Geometrien und auch unterschiedliche sonstige Eigenschaften. Ein weiterer Ansatz zum Herstellen von Schleifpartikeln ist das Extrudieren von einer Formmasse bzw. einer Dispersion einer Schleifpartikelvorstufe aus einer Extrusionsdüse. Ebenfalls bekannt sind Verfahren, bei denen eine Formmasse bzw. Dispersion einer Schleifpartikelvorstufe in eine Form gegossen wird. Dabei sind bereits Versuche unternommen worden, mehrschichtige Schleifpartikel herzustellen. Die bisher bekannten Verfahren lassen dabei jedoch insbesondere im Hinblick auf die Schichtdicke nur recht große Strukturen im Bereich von wenigen Millimetern pro Schicht zu, so dass insgesamt nur sehr einfache Geometrien von Mehrschicht-Schleifpartikeln realisiert werden können. Diese jedoch erfüllen nicht die oben genannten gewünschten positiven Eigenschaften.

Demnach liegt der vorliegenden Erfindung die Aufgabe zugrunde, ein Verfahren zur Herstellung von Mehrschicht-Schleifpartikeln bereitzustellen, welches die oben dargelegten Nachteile des Standes der Technik überwindet.

Diese Aufgabe wird durch das erfindungsgemäße Verfahren gemäß Anspruch 1 gelöst. Vorteilhafte Ausführungen des Verfahrens sind Gegenstand der Unteransprüche.

Der erfindungsgemäße Grundgedanke der vorliegenden Lehre besteht in der Anwendung einer Gitterstruktur mit Gittermaschen zum mehrfachen Auftragen einer Dispersion einer Schleifpartikelvorstufe. Die Gitterstruktur weist dabei Deckungsbereiche durch zumindest teilweise überdeckte Gittermaschen und Druckbereiche durch offene Gittermaschen auf.

Im Einzelnen sieht das Verfahren zur Herstellung von Mehrschicht-Schleifpartikeln die folgenden Verfahrensschritte vor:
Zunächst wird ein Substratträger bereitgestellt, auf dem die Schleifpartikel hergestellt bzw. die einzelnen Schichten der Schleifpartikel nacheinander abgeschieden bzw. aufeinander aufgebracht werden. Des Weiteren umfasst das Verfahren die Bereitstellung einer Dispersion einer Schleifpartikelvorstufe. Als Dispersion einer Schleifpartikelvorstufe zählt dabei jegliche Masse, deren Bestandteile sich zumindest aus dem Material der herzustellenden Schleifpartikel zusammensetzt oder zu diesem umwandeln lässt und zudem zumindest im Hinblick auf die Partikelgröße und die Viskosität, insgesamt jedoch allgemein zur Anwendung auf einer oben beschriebenen Gitterstruktur eignet. Darunter sind auch Sole von Sol-Gel-Systemen zu verstehen.

Eine zumindest zweifach wiederholte Schleife bzw. Iteration von Verfahrensschritten des erfindungsgemäßen Verfahrens sieht die Positionierung einer Gitterstruktur oberhalb des Substratträgers und das Auftragen bzw. das Verteilen der Dispersion einer Schleifpartikelvorstufe auf die Gitterstruktur, wobei ein Kontakt zwischen der Gitterstruktur und dem Substratträger oder auf dem Substratträger bereits angeordneten Schichten erzeugt wird und wobei beim Aufheben des Kontakts eine Dispersionsschicht in den Druckbereichen der Gitterstruktur auf dem Substratträger oder auf den darauf bereits angeordneten Schichten abgeschieden wird und eine anschließende Trocknungder jeweils abgeschiedenen Dispersionsschicht zu einer Schicht erfolgt.

Mit anderen Worten bedeutet dies, dass zunächst durch das Auftragen der Dispersion unter Erzeugung und Aufhebung des Kontakts zum Substratträger eine erste Dispersionsschicht auf dem Substratträger abgeschieden bzw. aufgedruckt sowie zu einer Schicht getrocknet wird und in weiteren Iterationen dieselben Verfahrensschritte durchgeführt werden, wobei jedoch die Erzeugung und die Aufhebung des Kontakts nunmehr zwischen der Gitterstruktur und den zuletzt abgeschiedenen bzw. gedruckten und getrockneten Schichten folgt.

Als Trocknung im Sinne der vorliegenden Erfindung soll jedoch nicht nur ein Verlust von Flüssigkeit bzw. Lösemittel aus der Dispersionsschicht verstanden werden, sondern auch verwandte oder ähnliche Prozesse, die zu einer mechanischen oder chemischen Stabilisierung der Dispersionsschicht führen.

Diese Wiederholung der Verfahrensschritte kann im Grunde genommen beliebig oft wiederholt werden. Danach kann sich zudem ein abschließender Härtungsvorgang anschließen, indem nochmals alle Schichten des Mehrschicht-Schleifpartikels einer entsprechenden Aushärtung unterzogen werden. Dabei kann es sich beispielsweise um einen Sintervorgang handeln.

Der besondere Vorteil des erfindungsgemäßen Verfahrens liegt darin, dass die so erzeugten Schichten der Mehrschicht-Schleifpartikel äußerst gering gehalten werden können. Dadurch lassen sich mit dem Verfahren bisher nicht realisierbare Geometrien von Mehrschicht-Schleifpartikeln realisieren. Insbesondere lassen sich Schleifpartikel mit einer Vielzahl von Ecken und Kanten mit einem Winkel von kleiner 90° erzeugen. Weiter wird ermöglicht, Schleifpartikel herzustellen, bei deren Anwendung in einem Schleifmittel die während des Schleifprozesses vom jeweiligen Schleifpartikel am Schleifgut zur Anlage kommende Oberfläche trotz des Verschleißes der Schleifpartikel möglichst konstant bleibt. Dadurch werden hinsichtlich der insgesamten Schleifleistung und Veränderung der Schleifleistung während des Schleifens sehr hochwertige Schleifpartikel erreicht.

Um für die verschiedenen herzustellenden Größen von Mehrschicht-Schleifpartikeln einen Ausgleich zu finden zwischen dem Verfahrensaufwand, der erheblich durch die Anzahl der Schichten bestimmt wird, und der wünschenswerten Präzision filigraner Strukturen von Mehrschicht-Schleifpartikeln, ist es besonders wünschenswert, wenn durch das Abscheiden jeweils Schichten mit 10 bis 500 µm, insbesondere Schichten mit 20 bis 250 µm Schichtdicke erzeugt werden.

Zur Herstellung von Schleifpartikeln im Allgemeinen ist bereits eine Vielzahl von Materialien bekannt, die einerseits hinsichtlich ihrer Eigenschaften gut charaktensiert sind und zudem in großen Mengen und mit gleichbleibender Qualität bezogen werden können. Dabei können die Materialien in der Form von pasteusen keramischen Massen, Sog-Gel-Systemen und in der Form von Schleifkörnungen vorliegen. Bei bekannten Schleifkörnungen handelt es sich beispielsweise um Siliziumkarbid, Zirkonkorund, Edelkorund und Halbedelkorund. Es ist besonders vorteilhaft, wenn derartige Schleifkörnungen auch beim vorgeschlagenen Verfahren zum Einsatz kommen, was beispielsweise dadurch erreicht wird, dass das Bereitstellen zumindest einer Dispersion einer Schleifpartikelvorstufe das Hinzufügen von Schleifkörnung umfasst. In diesem Fall kann das Bereitstellen der Dispersion zudem das Bereitstellen von Bindemitteln oder Aktivatoren umfassen, die eine Einbettung in die herzustellenden Mehrschicht-Schleifpartikel im Rahmen der Trocknung der Schichten oder dem abschließenden Sintern ermöglicht.

Zur Anwendung in dem erfindungsgemäßen Verfahren eignen sich besonders Dispersionen einer Schleifpartikelvorstufe, die eine Sol-Gel-Umwandlung durchlaufen. Derartige Sol-Gel-Systeme zeichnen sich dadurch aus, dass im Ausgangszustand ein so genanntes Sol bereitgestellt wird, in dem es während eines Reifungsprozesses zur Ausbildung von physikalischen und/oder chemischen Brückenbildungen kommt, bis die interne Vernetzung so ausgeprägt ist, dass das Sol bzw. die Flüssigkeit in einen Gelzustand übergeht, der im Allgemeinen durch ein Verhältnis des mechanischen Speichermoduls und des Verlustmoduls zueinander definiert wird. Derartige Systeme eignen sich unter anderem aufgrund der gut steuerbaren und mitunter relativ schnellen Umwandlung zwischen Solzustand und Gelzustand besonders für das erfindungsgemäße Verfahren, da damit eine schnelle Umwandlung von der Dispersionsschicht zu einer wiederum bedruckbaren Schicht erreicht werden kann. In diesem Fall kann die Trocknung der Dispersionsschicht nicht ausschließlich aber vornehmlich in der Vernetzung des Sols und dadurch bedingten mechanischen Stabilisierung realisiert werden. Ein Verlust an Lösungsmittel aus der Dispersionsschicht kann jedoch auch hier einen beträchtlichen Beitrag zur Trocknung bzw. mechanischen Stabilisierung der Dispersionsschicht beitragen. Dementsprechend sieht eine besonders bevorzugte Ausgestaltung vor, dass das Bereitstellen von zumindest einer Dispersion einer Schleifpartikelvorstufe das Herstellen eines Sols eines Sol-Gel-Systems umfasst.

Alternativ können auch pasteuse Massen als Dispersion einer Schleifpartikelvorstufe zum Einsatz kommen, welche mit entsprechenden Bindemitteln versehen sein können und somit auch die entsprechende Trocknung durchlaufen, in der die Reaktionen des Bindemittels zur Trocknung der Dispersionsschicht und deren mechanischen Stabilisierung beitragen können.

Bei bekannten Schleifmitteln können neben Schleifpartikeln auch so genannte schleifaktive Substanzen in die Schleifmittel aufgenommen bzw. in diese eingebracht werden. Als schleifaktive Substanzen gelten dabei Materialien, die beim Kontakt mit den Schleifpartikeln und/oder dem Schleifgut den Schleifprozess positiv beeinflussen, beispielhaft seien Kryolith oder Pyrit genannt. Die bekannten Verfahren zur Herstellung von Schleifmitteln erlauben jedoch nur eine Anordnung der schleifaktiven Substanzen in verhältnismäßig großem räumlichem Abstand zu den Schleifpartikeln, wodurch die Wirksamkeit bzw. Effektivität der schleifaktiven Substanzen nicht vollständig ausgenutzt werden kann. Dementsprechend ist es wünschenswert, die schleifaktiven Substanzen möglichst nahe an den Schleifpartikeln anzuordnen bzw. in die Schleifpartikel selbst zu integrieren. Folglich ist es besonders wünschenswert für das erfindungsgemäße Verfahren, dass das Bereitstellen einer Dispersion einer Schleifpartikelvorstufe das Hinzufügen schleifaktiver Substanzen vorsieht.

Wie bereits beschrieben, ermöglicht das erfindungsgemäße Verfahren durch die geringe jeweilige Schichtdicke der Mehrschicht-Schleifpartikel besondere Geometrien der resultierenden Schleifpartikel. Dieses Potential kann insbesondere dann voll ausgeschöpft werden, wenn die verwendeten Gitterstrukturen zur jeweiligen Abscheidung der Dispersionsschichten unterschiedliche Druck- und Abdeckungsbereiche aufweisen, wobei die Druckbereiche zweier aufeinanderfolgend verwendeter Gitterstrukturen zumindest abschnittsweise überlappen. Durch eine derartige Abfolge von verwendeten Gitterstrukturen lässt sich eine fast unbegrenzte Anzahl von dreidimensionalen Geometrien für die Mehrschicht-Schleifpartikel realisieren. Durch das abschnittsweise Überlappen der Druckbereiche nacheinander verwendeter Gitterstrukturen wird dabei sichergestellt, dass die jeweils nachfolgend abgeschiedene Dispersionsschicht auf der jeweils zuvor entstandenen Schicht ausreichend Halt, Stützung und Anlagefläche findet.

Eine weitere deutliche Verbesserung der resultierenden Mehrschicht-Schleifpartikel wird erreicht, wenn beim jeweiligen Auftragen der Dispersion auf eine Gitterstruktur unterschiedliche Dispersionen zum Einsatz kommen. Dabei kann sowohl vorgesehen sein, dass Gitterstrukturen mit identischen Druck- und Abdeckungsbereichen als auch Gitterstrukturen mit unterschiedlichen Druck- und Abdeckungsbereichen mit jeweils unterschiedlichen Dispersionen von Schleifpartikelvorstufen verwendet werden. So ist beispielsweise eine alternierende Schichtfolge aus zwei oder mehr unterschiedlichen Schichtmaterialien und entsprechenden Dispersionen der Schleifpartikelvorstufen denkbar. Andererseits sind jedoch auch einzelne Schichten oder eine Mehrzahl aneinander angrenzender Schichten aus einem Material denkbar, die sich von dem Material der restlichen Schichten und dementsprechend auch hinsichtlich der Dispersion der Schleifpartikelvorstufe, die zur jeweiligen Schichtherstellung verwendet wurde, unterscheiden.

Für Schleifpartikel ist es im Allgemeinen, wie oben bereits erwähnt, besonders wünschenswert, wenn während des Schleifvorgangs die mit dem Schleifgut in Kontakt kommende Oberfläche des Schleifpartikels trotz Verschleiß bzw. Abrieb seitens des Schleifpartikels keine große Veränderung erfährt. Zudem sind auch Kanten bzw. Oberflächen von Schleifpartikeln besonders wünschenswert, die einen möglichst kleinen Raumwinkel einschließen. Daraus folgt, dass insgesamt Hohlkörper besonders als Schleifpartikel geeignet sind, da beispielsweise bei einem Mantel des Hohlkörpers mit nahezu gleichbleibender Dicke bzw. Wand- oder Mantelstärke, die beim Schleifen angreifende bzw. anliegende Fläche weitestgehend unverändert bleibt und zudem bei der Eröffnung des vom Hohlkörper umfassten Hohlvolumens und im weiteren Verlauf des Abriebs des Schleifpartikels die angreifenden Oberflächen des Mantels verhältnismäßig wenig Raumwinkel aufweisen, die sich während des Schleifprozesses vergrößern. Dementsprechend ist das erfindungsgemäße Verfahren besonders vorteilhaft so ausgestaltet, dass ein Hohlkörper erzeugt wird, der einen Mantel aus Schichten und ein vom Mantel umschlossenes Hohlvolumen aufweist.

In einer besonders vorteilhaften Weise wird ein Hohlkörper mit dem erfindungsgemäßen Verfahren erzeugt, wenn zumindest drei Abscheidevorgänge von Schichten bzw. Dispersionsschichten ausgeführt werden, wobei zumindest die im zweiten Abscheidevorgang verwendete Gitterstruktur Abdeckungsbereiche aufweist, die jeweils vollständig von einem Druckbereich umgeben sind.

Weiter kann es vorteilhaft sein, wenn unabhängig von der Anzahl der Schichten bzw. der Anzahl der Abscheidevorgänge die dabei verwendete erste und letzte Gitterstruktur umgekehrt Druckbereiche aufweisen, die jeweils vollständig von einem Abdeckungsbereich umgeben sind. Ein derartiges Abscheiden der zumindest ersten und letzten Schicht bzw. Dispersionsschicht kann mit dem Erzeugen bzw. Vorsehen eines Bodens bzw. eines Deckels des Hohlkörper-Mehrschicht-Schleifpartikels verstanden werden.

Zwischen diesen zumindest zwei abschließenden Schichten können dabei eine Vielzahl von weiteren Schichten angeordnet sein, bei deren Herstellung Gitterstrukturen verwendet werden, bei denen Abdeckungsbereiche vollständig von Druckbereichen umgeben sind, um die entsprechenden Mantelstrukturen in der Richtung der jeweiligen Schichtdicke bzw. senkrecht zum Substratträger zu erzeugen.

Um eine besonders effiziente Herstellung von Mehrschicht-Schleifpartikeln zu erreichen, ist es besonders vorteilhaft, wenn der Substratträger in einem Transportsystem, wie beispielsweise einem Umlauftransportsystem transportiert wird und das Transportsystem dabei eine Mehrzahl von Bearbeitungs- bzw. Abscheidestationen umfasst, wobei an der zumindest einen bzw. an der Mehrzahl an Abscheidestationen jeweils die Anordnung einer Gitterstruktur oberhalb des Substratträgers erfolgt. Zudem kann ein solches Transportsystem auch Bearbeitungsstationen umfassen, an denen beispielsweise die Trocknung der Dispersionsschichten zu Schichten erfolgt bzw. befördert wird. In einem Umlauftransportsystem kann zudem vorgesehen sein, dass zwischen einer letzten Bearbeitungsstation und einer ersten Bearbeitungsstation die Mehrschicht-Schleifpartikel vom Substratträger entfernt werden.

Einzelne Ausgestaltungen und Aspekte des erfindungsgemäßen Verfahrens werden nachfolgend beispielhaft anhand lediglich schematischer Zeichnungen erläutert. Es zeigt:
- Figur 1a) - g): eine schematisierte Darstellung einzelner Verfahrensschritte des erfindungsgemäßen Verfahrens sowie schematische Darstellungen der dabei verwendeten Gitterstrukturen;
- Figur 2: eine schematische Darstellung einer beispielhaften Gitterstruktur;
- Figur 3: eine schematische Darstellung eines mittels des erfindungsgemäßen Verfahrens hergestellten Mehrschicht-Schleifpartikel gemäß einer ersten Ausgestaltung;
- Figur 4: eine schematische Darstellung eines mittels des erfindungsgemäßen Verfahrens herstellten Mehrschicht-Schleifpartikels gemäß einer zweiten Ausführung;
- Figur 5a) - d): eine schematische Darstellung einer Abfolge von Gitterstrukturen zur Herstellung eines Hohlkörper-Mehrschicht-Schleifpartikels mittels des erfindungsgemäßen Verfahrens;
- Figur 6: eine schematische Darstellung einer Vorrichtung zur Ausführung des erfindungsgemäßen Verfahrens.

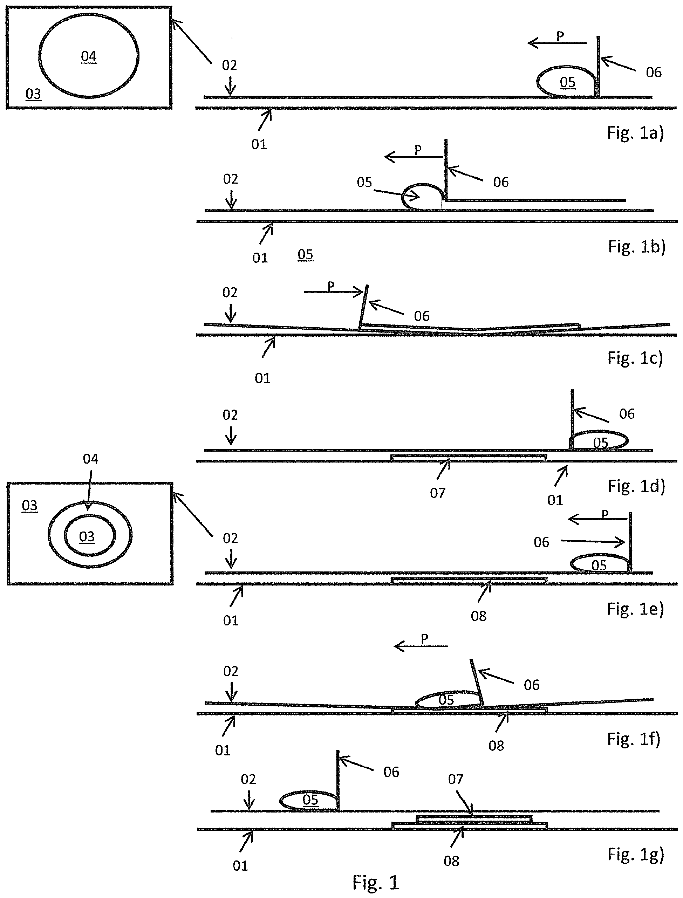

Figur 1a) zeigt eine seitliche Ansicht eines Substratträgers 01 sowie eine seitliche Ansicht einer über dem Substratträger 01 angeordneten Gitterstruktur 02. Die Gitterstruktur 02 ist neben ihrer seitlichen Ansicht auch in einer Draufsicht dargestellt. In der Draufsicht der Gitterstruktur 02 sind ein Abdeckungsbereich 03 sowie ein vom Abdeckungsbereich 03 umschlossener Druckbereich 04 dargestellt. Die Draufsicht auf die Gitterstruktur 02 ist dabei jedoch beispielhaft und damit deutlich vereinfacht dargestellt. Anstatt eines einzelnen Druckbereichs 04 und einem diesen umgebenden Abdeckungsbereich 03 können eine Vielzahl von in Reihen und Spalten angeordneten Druckbereichen 04 und diese umgebende und gegebenenfalls zu einem gesamten Abdeckungsbereich zusammengefasste Abdeckungsbereiche vorgesehen sein. Damit können dementsprechend viele einzelne Schleifpartikel bzw. Schichten zu deren Herstellung mittels einer entsprechend großflächigen Gitterstruktur erzeugt werden.

In Figur 1a) ebenfalls dargestellt, ist eine Dispersion einer Schleifpartikelvorstufe 05, die auf der Gitterstruktur 02 angeordnet ist. Die Dispersion der Schleifmittelvorstufe 05 wird mit einer Rakel 06 entlang der Gitterstruktur 02 verteilt bzw. mit dieser auf die Gitterstruktur 02 aufgetragen, was durch die Bewegung der Rakel 06 entlang des in der Figur 1a) abgebildeten Pfeils P angedeutet ist, der die grundsätzliche Bewegungsrichtung der Rakel 06 anzeigt.

Dabei kann in einem optionalen in Figur 1b) dargestellten Verfahrensschritt die Bewegung der Rakel 06 zunächst derart erfolgen, dass die Unterkante der Rakel 06 einen geringen Abstand zur Gitterstruktur 02 aufweist und dadurch zunächst eine gleichmäßig starke Schicht der Dispersion einer Schleifpartikelvorstufe 05 auf der Gitterstruktur 02 ausgebildet wird.

Bei der anschließenden Bewegung der Rakel 06 wird, wie in Figur 1c) dargestellt, auch eine Abwärtskraft in Richtung des Substratträgers 01 erzeugt, so dass beim Verteilen der Dispersion 05 bzw. beim Auftragen der Dispersion 05 auf die Gitterstruktur 02 ein Kontakt zwischen der Gitterstruktur 02 und dem Substratträger 01 erzeugt wird. In diesem Zustand kann die Dispersion 05 in den Druckbereichen 04 bzw. im Druckbereich 04 auf den Substratträger 01 übertragen bzw. aufgetragen werden. Aufgrund der Adhäsion zwischen dem Substratträger 01 und der Dispersion 05 bzw. zwischen der bereits vorhandenen Schicht 08 und der Dispersion 05 sowie durch die Massenträgheit der Dispersion 05 kann erreicht werden, dass beim Aufheben des Kontakts zwischen dem Substratträger 01 und der Gitterstruktur 02 die im Druckbereich 04 auf das Substrat übertragene bzw. aufgetragene Dispersion einer Schleifmittelvorstufe 05 auf dem Substratträger 01 verbleibt. Dies wird insbesondere dann ermöglicht, wenn der Kontakt zwischen Gitterstruktur 02 und Substratträger 01 möglichst in einem kurzen Zeitintervall aufgehoben wird. Nach dem Aufheben des Kontakts zwischen Gitterstruktur 02 und Substratträger 01 kann die Dispersion die Gitterstruktur 02 hinterlaufen, so dass kein Gitterabdruck zurückbleibt.

Figur 1d) zeigt den Zustand, in dem die Rakel 06 den gegenüberliegenden Teil der Gitterstruktur 02 im Vergleich zur Figur 1 fast erreicht hat und die Gitterstruktur 02 nicht mehr in Kontakt mit dem Substratträger 01 steht. Auf dem Substratträger 01 hat sich als Folge des Auftrags bzw. des Verteilens der Dispersion 05 über die Gitterstruktur 02 eine erste Dispersionsschicht 07 im Bereich des Druckbereichs 04 der Gitterstruktur 02 auf dem Substratträger 01 gebildet. Die Dispersionsschicht 07 kann im Zustand, wie er in der Figur 1d) dargestellt ist, beispielsweise eine Schichtdicke von 50 µm aufweisen. Die Schichtdicke wird dabei von verschiedenen Parametern beeinflusst, unter anderem durch die Rakelgeschwindigkeit der Rakel 06 sowie der Rakelgeometrie, dem Druck, der beim Kontakt zwischen dem Substratträger 01 und der Gitterstruktur 02 entsteht, und besonders auch durch die Zusammensetzung der Dispersion einer Schleifpartikelvorstufe 05. Dabei spielt nicht zuletzt die Rheologie der Dispersion 05 eine wichtige Rolle. Besonders bevorzugt sind zum Beispiel Sole eines keramischen Sol-Gel-Systems, die im Zustand, in dem sie auf die Gitterstruktur aufgetragen bzw. verteilt werden, ein thixotropes Scherverhalten sowie eine Nullviskosität im Bereich von etwa 10 - 5.000 Pas aufweisen.

An den Verfahrensfortschritt, wie er in der Figur 1d) dargestellt ist, schließt sich ein Trocknungsschritt an, mittels dem die Dispersionsschicht 07 in eine Schicht bzw. eine Schicht eines Schleifpartikels überführt wird. Dabei ist die Trocknung an sich stark von der jeweils verwendeten Dispersion 05 abhängig. Beispielsweise kann ein Sol-Gel-Übergang herbeigeführt werden. Alternativ bzw. additiv kann auch der Entzug von Lösemittel herbeigeführt werden oder ganz im Allgemeinen die Vernetzung der einzelnen Partikel der Dispersion 05 durch chemisch und physikalisch bedingte Vernetzung bzw. Brückenbildung vorangetrieben werden. Die Trocknung hat mindestens bis zu einem Grad zu erfolgen, an dem die entstehende Schicht 08 unter der Krafteinwirkung bei einem Kontaktieren mit einer Gitterstruktur 02 auf der Schicht 08 weitestgehend formstabil bleibt und schließlich auch unter der Gewichtseinwirkung von auf der Schicht 08 angeordneten weiteren Schichten 08 bzw. Dispersionsschichten 07 die Form beibehält.

Wie in der Figur 1e) dargestellt, wird im Anschluss daran die Gitterstruktur 02 ausgetauscht. Die nunmehr oberhalb des Substratträgers und der ersten Schicht 08 angeordnete Gitterstruktur 02 verfügt über einen ersten Abdeckungsbereich 03, der von einem Druckbereich 04 vollständig umschlossen wird. Der Druckbereich 04 seinerseits ist wiederum von einem zweiten Abdeckungsbereich 03 vollständig umschlossen. Daraus wird erkenntlich, dass mittels der Gitterstruktur 02 ein kreisrunder Ring mit einem Verfahren abgeschieden bzw. gedruckt werden kann, dessen Verfahrensschritte weitestgehend dem Vorgehen der Figuren 1a bis 1d entsprechen. Im Fall der Figur 1e wird dabei die Rakel in umgekehrter Richtung bewegt, um die Dispersion 05 auf der Gitterstruktur zu verteilen bzw. aufzutragen.

Figur 1f) zeigt korrespondierend zur Figur 1c den Vorgang des Kontaktierens und des Aufhebens des Kontakts zwischen der Gitterstruktur, wobei jedoch in der Darstellung der Figur 1f) der Kontakt zwischen der ersten Schicht 08 und der Gitterstruktur 02 erzeugt bzw. aufgehoben wird. Auch ist die in Figur 1b) zunächst ausgebildete gleichmäßige Schicht der Dispersion einer Schleifpartikelvorstufe 05 auf der Gitterstruktur 02 nicht dargestellt, was jedoch nicht bedeutet, dass dieser optionale Verfahrenschritt nicht auch vor dem Kontaktieren und Aufheben des Kontakts gemäß der Darstellung der Figur 1f) erfolgt sein kann.

In Figur 1g) ist dementsprechend eine zweite Dispersionsschicht 07 der ersten Schicht 08 abgeschieden bzw. angeordnet, die dann wiederum einer entsprechenden Trocknung unterzogen wird.

Das Verfahren der Figuren 1a) bis 1g) kann mit entsprechend unterschiedlichen Gitterstrukturen 02 wiederholt werden, um einen entsprechenden Mehrschicht-Schleifpartikel herzustellen. Ausgehend von den in den Figuren 1a) und 1e) gezeigten Gitterstrukturen 02 ist beispielsweise vorstellbar, dass ein Mehrschicht-Schleifpartikel in Form eines Hohlkörpers gefertigt wird, der eine Stufenstruktur umfasst und im Wesentlichen die Form eines Hohlkegels annähert.

Wie aus der Figur 1 offensichtlich wird, sind mittels des beschriebenen Verfahrens annähernd beliebige Geometrien von Mehrschicht-Schleifpartikeln und insbesondere von Hohlkörper-Mehrschicht-Schleifpartikeln herstellbar.

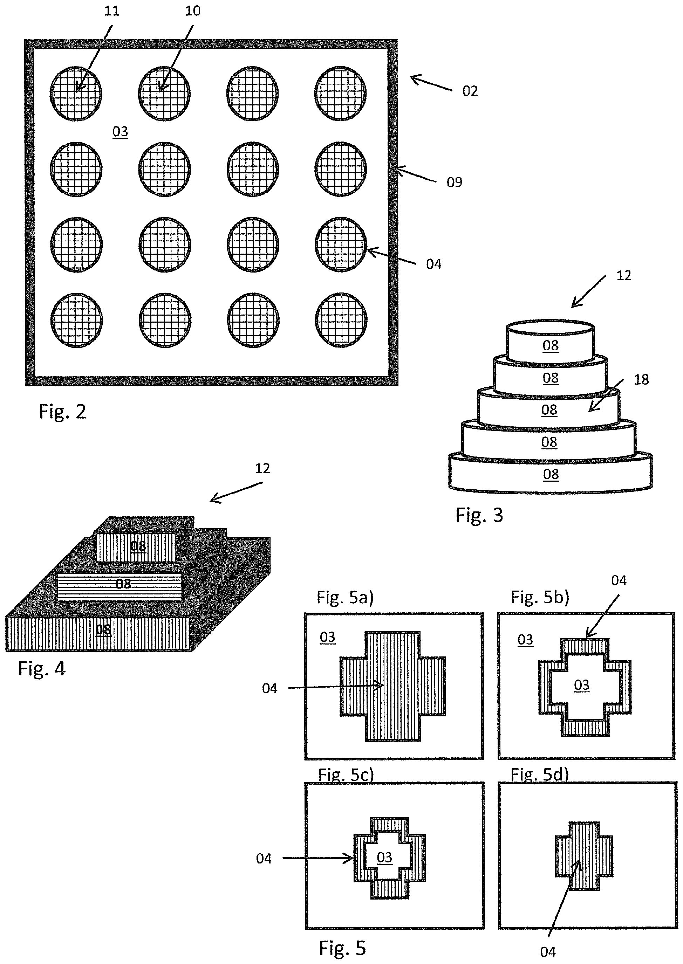

Figur 2 zeigt schematisch eine im erfindungsgemäßen Verfahren zur Anwendung kommende Gitterstruktur 02. Die Gitterstruktur 02 verfügt über einen Rahmen 09, der zur Aufspannung eines Gitters aus entsprechenden Gitterfäden 10 dient. Dadurch werden zwischen den Gitterfäden 10 entsprechende Gittermaschen 11 gebildet. Beispielsweise können die Gitterfäden eine Stärke von 30 µm und die Abstände zwischen den Gitterfäden ungefähr 70 µm betragen. In der Figur 2 ist auf dem aus den Gitterfäden gebildeten Gitter eine weitere Materialschicht angebracht, die die Gittermaschen abschnittsweise überdeckt bzw. ausfüllt. Diese Schicht bildet somit die Abdeckungsbereiche 03, im Fall der Figur 2 einen zusammenhängenden Abdeckungsbereich 03. Dieser umschließt eine Vielzahl von kreisrund ausgebildeten Druckbereichen 04, die matrixförmig in Reihen und Spalten angeordnet sind. Ebenfalls denkbar ist jedoch jede andere Anordnung, insbesondere eine Anordnung, die eine möglichst hohe Anzahl von Druckbereichen zulässt.

Figur 3 zeigt beispielhaft einen Mehrschicht-Schleifpartikel 12 umfassend die Schichten 08. Figur 3 ist dabei ein Mehrschicht-Schleifkörper in Form eines angenäherten Kegels, wie er beispielsweise unter Verwendung der Gitterstrukturen 02 aus den Figuren 1 und 2 hervorgehen kann. Gleichzeitig ist es jedoch auch möglich, dass der in Figur 3 gezeigte Mehrschicht-Schleifpartikel 12 lediglich aus Gitterstrukturen 02 gefertigt wird, wie sie Figur 2 zeigt. Mit anderen Worten ausgedrückt, kann der Mehrschicht-Schleifkörper 12 der Figur 3 auch als Vollkegel anstatt als Hohlkegel ausgestaltet sein. Im Falle eines Hohlkegels umschließen die Schichten 08 ein innen liegendes Hohlvolumen 18.

In Figur 4 ist ein Mehrschicht-Schleifpartikel 12 dargestellt, der auf einer Abwandlung des erfindungsgemäßen Verfahrens beruht, die vorsieht, dass bei unterschiedlichen Vorgängen des Aufbringens bzw. Druckens von Schichten 08 unterschiedliche Dispersionen einer Partikelvorstufe zum Einsatz kommen. Dies ist in Figur 4 anhand der unterschiedlichen Schraffierungen der Schichten 08 angedeutet. Das Beispiel der Figur 4 zeigt eine alternierende Schichtfolge. Es sind jedoch auch andere Schichtfolgen mit mehr als zwei unterschiedlichen Dispersionen einer Partikelvorstufe und/oder anderen Abfolgen denkbar.

Figur 5 zeigt in den Figuren 5a) bis 5d) eine beispielhafte Abfolge von Gitterstrukturen 02, wie sie im erfindungsgemäßen Verfahren zur Herstellung eines Hohlkörper-Mehrschicht-Schleifpartikels zum Einsatz kommen können.

Figur 5a) zeigt eine Gitterstruktur mit einem Druckbereich 04 in Form eines Kreuzes sowie einen den Druckbereich vollständig umgebenden Abdeckungsbereich 03.

Die Figur 5b) zeigt eine Gitterstruktur, bei der ein erster Abdeckungsbereich 03 vollständig von einem Druckbereich 04 umgegeben ist, wobei der Druckbereich 04 so angeordnet ist, dass er zumindest abschnittsweise auf dem Druckbereich 04 der Figur 5a) angeordnet ist. Zudem ist auch der erste Abdeckungsbereich 03 sowie der Druckbereich 04 der Gitterstruktur der Figur 5b) kreuzförmig ausgestaltet. Daraus folgt, dass bei Anwendung des erfindungsgemäßen Verfahrens unter Verwendung der Gitterstruktur der Figur 5b) ein Kreuz als Dispersionsschicht bzw. nach anschließender Trocknung als Schicht ausgebildet wird, welche die Form eines Randes eines Kreuzes hat.

Die Figur 5c) entspricht von der Anordnung der Abdeckungsbereiche 03 und des Druckbereichs 04 im Wesentlichen der Gitterstruktur der Figur 5b), wobei sowohl das Kreuz des ersten bzw. inneren Abdeckungsbereichs 03 als auch das Kreuz des Druckbereichs 04 gegenüber denen der Figur 5b) verkleinert ist. Gleichzeitig ist jedoch der Druckbereich 04 der Gitterstruktur der Figur 5c) zumindest abschnittsweise oberhalb der Schicht angeordnet, wie sie beim Durchführen des erfindungsgemäßen Verfahrens unter Verwendung der Gitterstruktur der Figur 5b) entsteht. Damit wird ermöglicht, dass die Dispersionsschicht beim Auftragen unter Verwendung der Gitterstruktur 02 der Figur 5c) auf der getrockneten Schicht, wie sie aus der Benutzung der Gitterstruktur der Figur 5b hervorgeht, möglich ist.

Die Figur 5d) zeigt eine Gitterstruktur 02 mit lediglich einem Druckbereich 04 in Form eines Kreuzes und einen den Druckbereich 04 vollständig umschließenden Abdeckungsbereich 03. Die Gitterstruktur der Figur 5d) ermöglicht somit das Verschließen des Hohlkörpers der aus der Verwendung der Gitterstruktur der Figuren 5a) bis 5c) hervorgeht. Dementsprechend resultiert aus der beispielhaften Anwendung der Gitterstrukturen der Figuren 5a) bis 5d) ein pyramidenförmiger Hohlkörper-Mehrschicht-Schleifpartikel mit der Grundform eines Kreuzes.

Ein besonderer Vorteil des beanspruchten Verfahrens besteht darin, dass die verwendeten Dispersionen von Schleifpartikelvorstufen 05 im Rahmen des Verfahrens auch als Überhang bzw. als überdruckbare Fläche ausgestaltet sein können, die bis zu einem gewissen Grad bei der Umwandlung der Dispersionsschicht 07 in eine Schicht 08 keiner Unterlage seitens des Substratträgers 01 oder einer anderen Schicht bedürfen, ohne dass es zu einer wesentlichen Verformung der Dispersionsschicht 07 oder der Schicht im Überhangbereich kommt. Dementsprechend kann das erfindungsgemäße Verfahren auch so ausgeführt werden, dass die Gitterstrukturen der Fig. 5 in einer Reihenfolge beginnend von Fig. 5d) und endend bei Fig. 5a) verwendet werden.

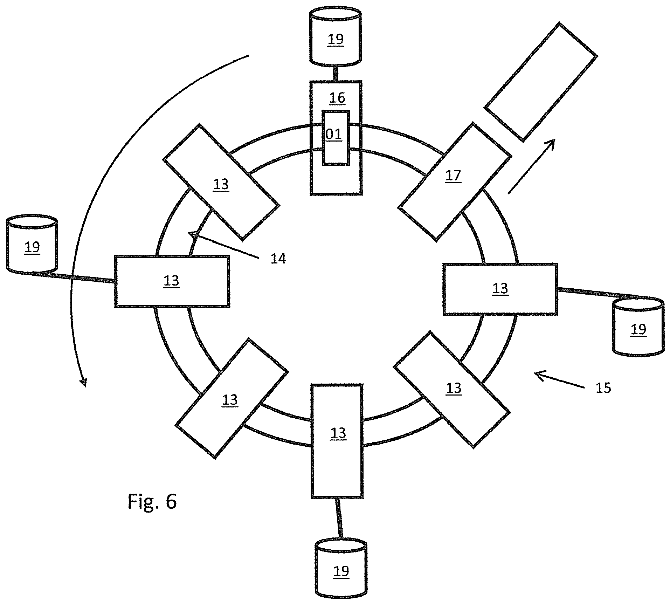

Die Figur 6 zeigt ein beispielhaftes Umlauftransportsystem 15 zur Ausführung des erfindungsgemäßen Verfahrens. Das Umlauftransportsystem umfasst dabei eine Mehrzahl von Bearbeitungsstationen 13, die durch ein entsprechendes Transportmittel 14 zum Transport von Substratträgern 01 miteinander verbunden sind. Wie in Figur 6 schematisch dargestellt, können bei verschiedenen Bearbeitungsstationen Bevorratungsvorrichtungen 19 angeordnet sein, die die Bevorratung von Dispersionen von Partikelvorstufen 05 gewährleisten. Der Substratträger 01 wird im Umlauftransportsystem 15 der Figur 6 von einer ersten Bearbeitungsstation 16 entlang des Pfeils durch die entsprechenden Bearbeitungsstationen 13 befördert, bis es an der letzten Bearbeitungsstation 17 angelangt ist. An dieser Bearbeitungsstation erfolgt die Entnahme der resultierenden Mehrschicht-Schleifpartikel und gegebenenfalls eine Reinigung des Substartträgers 01, bevor der Substratträger 01 erneut der ersten Bearbeitungsstation 16 mittels des Transportmittels 14 zugeführt wird.

Selbstverständlich ist es bei einem Umlauftransportsystem 15, wie es in der Figur 6 dargestellt ist, verfahrensökonomisch nicht nur ein Substratträger 01 vorzusehen, sondern mindestens so viele Substratträger, wie Bearbeitungsstationen vorhanden sind. Dies kann vorteilhaft sein, wenn in den Bearbeitungsstationen 13, die nicht über eine Bevorratungsvorrichtung 19 für eine Dispersion einer Partikelvorstufe 05 verfügen und demnach an diesen Bearbeitungsstationen 13 kein Auftragen von Dispersionen erfolgen kann, eine entsprechende Trocknung der Dispersionsschichten erfolgt. Für den Fall, dass jedoch die Trocknung der Dispersionsschichten außerhalb bzw. zwischen einzelnen Bearbeitungsstationen 13 erfolgt, kann es alternativ sogar vorteilhaft sein, mehrere Substratträger 01 als Bearbeitungsstationen 13 vorzusehen. Damit kann die Trocknung der Dispersionsschichten jeweils zwischen den Bearbeitungsstationen 13 erfolgen und an einer jeweils weiteren bzw. nächsten Bearbeitungsstation 13 ein erneuter Auftrag bzw. eine Abscheidung einer Dispersionsschicht erfolgen.

## Patentansprüche

1. Verfahren zur Herstellung von Mehrschicht-Schleifpartikeln (12), umfassend die Verfahrensschritte:
Bereitstellen eines Substratträgers (01) und zumindest einer Dispersion einer Schleifpartikelvorstufe (05);
Mehrfache Positionierung zumindest einer Gitterstruktur (02) oberhalb des Substratträgers (01), wobei Abdeckungsbereiche (03) durch zumindest teilweise überdeckte Gittermaschen (11) und Druckbereiche (04) durch offene Gittermaschen (11) definiert werden;
Auftragen der zumindest einen Dispersion (05) auf die Gitterstruktur (02), wobei ein Kontakt zwischen Gitterstruktur (02) und dem Substratträger (01) oder auf dem Substratträger (01) angeordneten Schichten (08) erzeugt wird, und wobei beim Aufheben des Kontakts eine Dispersionsschicht (07) in den Druckbereichen (04) auf dem Substratträger (01) oder auf den darauf bereits angeordneten Schichten (08) abgeschieden wird und anschließende Trocknung der jeweils abgeschiedenen Dispersionsschicht (07) zu einer Schicht (08),
wobei geschlossene Hohlkörper erzeugt werden, die jeweils einen Mantel aus Schichten (08) und ein von dem Mantel umschlossenes Hohlvolumen (18) aufweisen, **gekennzeichnet dadurch, dass** zumindest bei einem Abscheidevorgang eine Gitterstruktur (02) verwendet wird, deren Abdeckungsbereiche (03) jeweils vollständig von einem Druckbereich (04) umgeben sind, sowie in einem ersten und einem letzten Abscheidevorgang Gitterstrukturen (02) verwendet werden, deren Druckbereich (04) jeweils vollständig von einem Abdeckungsbereich (03) umgeben ist.

2. Verfahren nach Anspruch 1,
**dadurch gekennzeichnet,**
**dass** durch das Abscheiden Schichten (08) mit 10 bis 500 µm, insbesondere Schichten mit 20 bis 250 µm Schichtdicke erzeugt werden.

3. Verfahren nach Anspruch 1 oder 2,
**dadurch gekennzeichnet,**
**dass** das Bereitstellen zumindest einer Dispersion einer Schleifpartikelvorstufe (05) das Hinzufügen von Schleifkörnung umfasst.

4. Verfahren nach einem der Ansprüche 1 bis 3,
**dadurch gekennzeichnet,**
**dass** das Bereitstellen zumindest einer Dispersion einer Schleifpartikelvorstufe (05) das Herstellen eines Sols eines Sol-Gel-Systems umfasst.

5. Verfahren nach einem der Ansprüche 1 bis 4,
**dadurch gekennzeichnet,**
**dass** das Bereitstellen zumindest einer Dispersion einer Schleifpartikelvorstufe (05) das Hinzufügen schleifaktiver Substanzen vorsieht.

6. Verfahren nach einem der Ansprüche 1 bis 5,
**dadurch gekennzeichnet,**
**dass** Gitterstrukturen (02) mit unterschiedlichen Druck- (04) und Abdeckungsbereichen (03) verwendet werden.

7. Verfahren nach Anspruch 6,
**dadurch gekennzeichnet,**
**dass** der Druckbereich (04) zweier aufeinanderfolgend verwendeter Gitterstrukturen (02) zumindest abschnittsweise überlappt.

8. Verfahren nach einem der Ansprüche 1 bis 7,
**dadurch gekennzeichnet,**
**dass** unterschiedliche Dispersionen (05) für das Auftragen verwendet werden.

9. Verfahren nach Anspruch 8,
**dadurch gekennzeichnet,**
**dass** zwei unterschiedliche Dispersionen (05) im Wechsel aufgetragen werden.

## Claims

1. A method for producing multilayer abrasive particles (12), comprising the following method steps:
providing a substrate support (01) and at least one dispersion of an abrasive particle precursor (05);
repeatedly positioning at least one grid structure (02) above the substrate support (01), covering areas (03) being defined by at least partially covered grid meshes (11) and printing areas (04) being defined by open grid meshes (11);
applying the at least one dispersion (05) onto the grid structure (02), a contact being formed between the grid structure (02) and the substrate support (01) or layers (08) arranged on the substrate support (01), and a dispersion layer (07) being deposited in the printing areas (04) on the substrate support (01) or on the layers (08) previously arranged thereon when the contact is lifted, and
subsequently drying each deposited dispersion layer (07) to form a layer (08),
wherein closed hollow bodies each having a shell made of layers (08) and a hollow space (18) enclosed by the shell are produced,
**characterized in that**
a grid structure (02) whose covering areas (03) are each completely surrounded by a printing area (04) is used in at least one depositing process, and grid structures (02) whose printing areas (04) are each completely surrounded by a covering area (03) are used in a first and in a last depositing process.

2. The method according to claim 1,
**characterized in that**
the deposition produces layers (08) having a layer thickness of 10 to 500 µm, in particular layers having a layer thickness of 20 to 250 µm.

3. The method according to claim 1 or 2,
**characterized in that**
the step of providing at least one dispersion of an abrasive particle precursor (05) comprises adding abrasive grit.

4. The method according to any one of claims 1 to 3,
**characterized in that**
the step of providing at least one dispersion of an abrasive particle precursor (05) comprises producing a sol of a sol-gel system.

5. The method according to any one of claims 1 to 4,
**characterized in that**
the step of providing at least one dispersion of an abrasive particle precursor (05) comprises adding abrasive substances.

6. The method according to any one of claims 1 to 5,
**characterized in that**
grid structures (02) having different printing (04) and covering areas (03) are used.

7. The method according to claim 6,
**characterized in that**
the printing areas (04) of two successively used grid structures (02) overlap at least in sections.

8. The method according to any one of claims 1 to 7,
**characterized in that**
different dispersions (05) are used for the application step.

9. The method according to claim 8,
**characterized in that**
two different dispersions (05) are applied alternately.

## Revendications

1. Procédé de fabrication de particules abrasives multicouches (12), comprenant les étapes suivantes :
préparer un support de substrat (01) et au moins une dispersion d'un précurseur de particules abrasives (05) ;
positionner plusieurs fois au moins une structure de grille (02) au-dessus du support de substrat (01), des parties de recouvrement (03) étant définies par des mailles de grille (11) au moins partiellement couvertes et des zones d'impression (04) étant définies par des mailles de grille (11) ouvertes ;
appliquer l'au moins une dispersion (05) sur la structure de grille (02), un contact étant formé entre la structure de grille (02) et le support de substrat (01) ou des couches (08) disposées sur le support de substrat (01), et une couche de dispersion (07) étant déposée dans les zones d'impression (04) sur le support de substrat (01) ou sur les couches (08) déjà disposées quand le contact est supprimé, et
ensuite sécher en une couche (08) chacune couche de dispersion (07) déposée, dans lequel des corps creux fermés sont produits, qui ont chacun une enveloppe constituée de couches (08) et un creux (18) entouré de l'enveloppe,
**caractérisé en ce qu'**
une structure de grille (02) dont les parties de recouvrement (03) sont chacune complètement entourées d'une zone d'impression (04) est utilisée dans au moins un processus de dépôt, et des structures de grilles (02) dont les zones d'impression (04) sont chacune complètement entourées d'une partie de recouvrement (03) sont utilisées dans un premier et un dernier processus de dépôt.

2. Procédé selon la revendication 1,
**caractérisé en ce que**
le dépôt produit des couches (08) ayant une épaisseur de couche de 10 à 500 µm, notamment des couches ayant une épaisseur de couche de 20 à 250 µm.

3. Procédé selon la revendication 1 ou 2,
**caractérisé en ce que**
la préparation d'au moins une dispersion d'un précurseur de particules abrasives (05) comprend l'ajoute de granulés abrasifs.

4. Procédé selon l'une quelconque des revendications 1 à 3,
**caractérisé en ce que**
la préparation d'au moins une dispersion d'un précurseur de particules abrasives (05) comprend la production d'un sol d'un système sol-gel.

5. Procédé selon l'une quelconque des revendications 1 à 4,
**caractérisé en ce que**
la préparation d'au moins une dispersion d'un précurseur de particules abrasives (05) comprend l'ajoute de substances abrasives.

6. Procédé selon l'une quelconque des revendications 1 à 5,
**caractérisé en ce que**
des structures de grilles (02) ayant des zones d'impression (04) et des parties de recouvrement (03) différentes sont utilisées.

7. Procédé selon la revendication 6,
**caractérisé en ce que**
les zones d'impression (04) de deux structures de grilles (02) utilisées successivement se chevauchent au moins par sections.

8. Procédé selon l'une quelconque des revendications 1 à 7,
**caractérisé en ce que**
des dispersions (05) différentes sont utilisées pour l'application.

9. Procédé selon la revendication 8,
**caractérisé en ce que**
deux dispersions (05) différentes sont appliquées en alternance.
